# EUROPEAN PATENT SPECIFICATION

(11) **EP 1 569 474 B1**
(45) Date of publication and mention of the grant of the patent: **26.11.2008**
(21) Application number: 04251151.9
(22) Date of filing: 27.02.2004
(51) Int. Cl.: H04Q 7/28

(54) **Transmit channel request messaging for half-duplex voice communications systems**
Übermittlung einer Anforderung für einen Übertragungskanal für Halbduplex-Sprachkommunikationssysteme
Messagerie de demande pour un canal de transmission dans des systèmes de communication vocaux semi duplex

(43) Date of publication of application: 31.08.2005
(60) Divisional application: 08159116.6
(73) Proprietor: Research In Motion Limited, Waterloo, Ontario N2L 3W8 (CA)
(72) Inventor: Rao, Padakandla Krishna, Kanata, Ontario K2W 1C4 (CA); Yau, Sing Janus, Ottawa, Ontario K1Y 0N9 (CA)
(74) Representative: Rickard, David John

(56) References cited:
- WO-A-00/35231
- "Terrestrial Trunked Radio (TETRA); Voice plus Data (V+D); Designers' guide Part 3: Direct Mode Operation (DMO); ETR 300-3" ETSI STANDARDS, EUROPEAN TELECOMMUNICATIONS STANDARDS INSTITUTE, SOPHIA-ANTIPO, FR, vol. TETRA-1, February 2000 (2000-02), XP014011429 ISSN: 0000-0001

## Description

The invention relates to wireless communications systems and more particularly to messaging in wireless communications systems having half-duplex voice communications services.

Communication systems are available which provide walkie-talkie-like functionality or similar half-duplex voice functionality which may take the form of PTT^{™} (push-to-talk^{™}) over a dispatch service, PUT^{™} over cellular (PoC) services (part of the OMA standard), or otherwise. When referred to herein, walkie-talkie-like functionality and half-duplex voice functionality are to be taken generally to mean any network delivered voice communication functionality which at any one time is capable of transmitting voice communication from a talking or transmitting party's device to a listening or receiving party's device, but cannot simultaneously transmit voice communication from the receiving party's device to the talking party's device, while the talking party's device is transmitting voice to the receiving party's device. During an active PTT^{™} session or dispatch call session, only one user device (the "talker's" device) participating in the session may be designated as the transmitting or talking device at any one time. A user device gains the role of transmitting device by requesting the talk/transmit channel from the network and by being granted the talk/transmit channel by the network. While a talker's device is in possession of the transmit channel (during a talk period), all of the other devices (listeners' devices) in the active dispatch call session are in listener mode and cannot transmit voice until the transmitting device requests the network to terminate the talk period and release the talk/transmit channel. Times during which the talk/transmit channel is not occupied are idle periods. In standard implementations of PTT^{™}, the user interface of, for example, a mobile device, includes a PTT^{™} button to allow the user to control the sending of requests to acquire and release the talk/transmit channel, these requests being sent over a logical control channel to the network.

An example of a system providing PTT^{™} functionality as part of its dispatch services is the iDEN^{™} system of Motorola^{™}. Other example systems which can provide such PTT^{™} services are 1xRTT CDMA, UMTS, GSM/GPRS, and TDMA. Push-to-talk^{™} service may be provided as an optional half-duplex service over existing network systems which also provide for full-duplex communication, or may be provided as a service over network systems which provide only half-duplex communication.

"Terrestrial Trunked Radio (TETRA); Voice plus Data (V+D); Designer's guide Part 3: Direct Mode Operation (DMO); ETR 300-3" ETSI STANDARDS, EUROPEAN TELECOMMUNICATIONS STANDARDS INSTITUTE, SOPHIA-ANTIPO, FR, vol. TETRA-1, February 2000 (2000-02), XP014011429 ISSN: 0000-0001" describes various TETRA modes of operation as used by the emergency services.

International publication No. WO 00/35231 describes a Trunked Private Mobile Radio (PMR) system.

WO01/67674 describes a push-to-talk communication device adapted to participate in a group communication net in which a user agent server makes a determination as to whether it should revoke control of the network floor from a talking communication device.

The present invention provides for a method, system, and device for transmit channel request messaging in half-duplex voice communication systems. A new transmit channel request message (TCRM) is provided and sent over a logical control channel from a receiving device to a transmitting device while the transmitting device is in possession of a transmit channel in an active half-duplex dispatch call session, the TCRM indicating that the transmit channel is requested. In some embodiments, the invention provides for the conveying of information via the transmitting device user interface (UI) indicating, that while the transmitting device is in possession of the transmit channel, another user wishes to talk. In some embodiments, the information includes an indication that another device has requested the transmit channel and preferably includes an identification of the device which sent the transmit channel request message. In some embodiments, a qualifier flag in the TCRM is used to specify what, if any, extended functionality in respect of the TCRM is to be performed.

According to one broad aspect, the invention provides for a method of messaging during an active half-duplex session between a plurality of user devices communicating using a network delivered half duplex voice communication functionality, the method comprising a receiving-in-half-duplex device of said plurality of user devices receiving a voice communication in a half-duplex mode for the active half-duplex session, and transmitting a transmit channel request message, a transmitting-in-half-duplex device of said plurality of user devices transmitting the voice communication in half-duplex mode for the active half-duplex session, and receiving the transmit channel request message; wherein the network receives the transmit channel request message from the receiving-in-half-duplex device, determines which of the plurality of user devices is the transmitting-in-half-duplex device, and forwards the transmit channel request message to the transmitting in half-duplex device, and wherein the network receives the voice communication from the transmitting-in-half-duplex device and forwards the voice communication to the receiving-in-half-duplex device; and wherein only a first transmit channel request message from the receiving-in-half-duplex device is sent to the transmitting-in-half-duplex device for a set flood protection duration.

According to another broad aspect, the invention provides for a user device adapted to communicate using a network delivered half duplex voice communication functionality to participate in an active half-duplex session, the user device comprising means for receiving an external input from a user requesting the user device to transmit an outgoing transmit channel request message, means for transmitting the outgoing transmit channel request message responsive to the request, means for receiving an incoming transmit channel request message while the user device is in transmit half-duplex mode; wherein the user device is arranged to communicate with the network for receiving and transmitting both the transmit channel request message and a voice communication in a half duplex mode for an active half-duplex session, and wherein the user device further comprises means for generating a user-detectable notification that another user device has requested control of the transmit channel in response to receiving the incoming transmit channel request message; and wherein the user device is adapted to operate with the network such that only a first transmit channel request message from the user device is sent to a transmitting-in-half-duplex device for a set flood protection duration.

According to a further broad aspect, the invention provides for a network adapted to facilitate an active half-duplex session involving a plurality of user devices using a network delivered half duplex voice communication functionality, the network comprising a message processing element adapted to forward a transmit channel request message from a receiving in half-duplex device of the plurality of user devices to a transmitting in half duplex device of the plurality of user devices by receiving the transmit channel request message over an input channel from the receiving in half-duplex device, determining which of the plurality of user devices is the transmitting in half-duplex device based on the transmit channel request message; and transmitting the transmit channel request message over an output channel to the transmitting-in-half-duplex device; wherein said network is adapted to forward only a first transmit channel request message from the receiving-in-half-duplex device to the transmitting-in-half-duplex device for a set flood protection duration.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Preferred embodiments of the invention will now be described with reference to the accompanying diagrams, in which:
FIG. 1 is a block diagram illustrating example transmit channel request messaging in an active PTT™ session of a group according to an embodiment of the invention;
FIG. 2 is a flow diagram depicting steps performed by a system to implement transmit channel request messaging according to another embodiment of the invention;
FIG. 3 is a block diagram of a transmit channel request message data structure in accordance with a further embodiment of the invention;
FIG. 4 is a conceptual block diagram of a network provided by an embodiment of the invention; and
FIG. 5 is a block diagram of an example implementation of a PTT™ capable wireless device provided by an embodiment of the invention.

### DESCRIPTION OF PREFERRED EMBODIMENTS

Users on the receiving end of a push-to-talk™ session held on known systems have no way of communicating to the user of the transmitting device, since the talk/transmit channel is occupied by the transmitting device until released. As such, prior to the present invention there was no mechanism to inform the user of the transmitting device that another user wishes to talk.

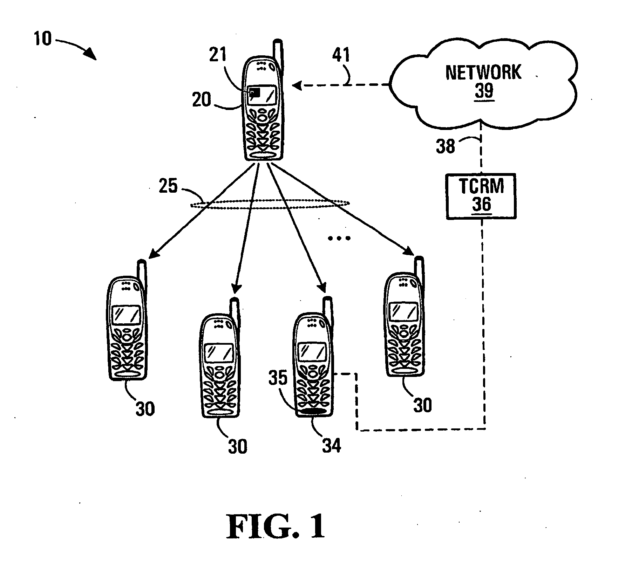

Referring now to Figure 1, transmit channel request messaging according to the invention will now be described in the context of an active dispatch call session for a PTT™ group of wireless mobile devices in a half-duplex dispatch system. More generally, embodiments of the invention are applicable in the context of wireless devices and networks which participate in network delivered walkie-talkie-like functionality, PTT™ being but one example. A network capable of delivering this will be referred to as a "dispatch network".

Shown is a PTT™ group (indicated generally by reference numeral 10) consisting of a group of mobile devices participating in an active PTT™ session while a transmit channel is possessed. The group contains a single mobile device 20 in THD (transmitting in half-duplex) mode which is in talk/transmit mode and in possession of the transmit chanel, and a set (only four shown) of devices 30,34 in RHD (receiving in half-duplex) mode which are in listening mode. It should be understood that transmit channel messaging is equally applicable to embodiments in which the dispatch call session only involves two devices (a 1-to-1 session) or which involves more than two devices (a 1-to-many session). To simplify this description, a device in THD mode or RHD mode will be referred to as a THD device or an RHD device respectively. However it is to be understood these are temporary designations for the particular mode of operation of the device at any particular time. During the active session, the users of the RHD devices (30, 34) are referred to as listeners, while the user of the THD device 20 is referred to as the talker. Each device of the specific embodiment shown in Figure 1 is capable of functioning either as a THD device or an RHD device, depending upon which device is in talk/transmit mode and which devices are in listening mode during any particular active session.

The establishment of the physical links between devices of the users, the routing of voice data packets, and the duplication of voice data packets to each of the devices in listening mode are specific to each implementation of a PTT™ or similar half-duplex voice communication system. These functions are represented abstractly by links 25 which represent all of the system components necessary to communicate the voice data sent by the THD device 20 to all of the RHD devices 30 and in general support the functions of an active session. The details of these links are not relevant here. During the active session, the THD device 20 possesses the talk/transmit channel until it requests release of the channel or terminates the call.

According to a preferred embodiment, an example of which is depicted in Figure 1, during an active session a listener's device 34 in listening mode is adapted to send a transmit channel request message (TCRM) 36 over a logical control channel 38 in response to external input from the listener. In the illustrated example the external input occurs when button 35 is depressed. The logical control channel 38 may be a control channel, data channel, or dedicated messaging channel depending upon the system in which the messaging is implemented. More generally, any channel that allows the network to receive an indication that the user has requested the transmit channel may be employed. While referred to herein as a "message", this encompasses any signal sent by the wireless device to achieve the desired effect. The TCRM 36 is received by the network 39 and forwarded to the THD device 20. The message is forwarded to the THD device on logical control channel 41 which has the same options for implementation as the logical control channel 38. It is noted that the network 39 represents all system components necessary to receive a TCRM message from an RHD device and forward this on to the THD device 20. This functionality may overlap partially, completely, or not at all with the functionality generally represented by 25 which provides normal PTT™ voice capabilities.

In an embodiment implemented in the iDEN™ system of Motorola™, a preferred logical control channel is the data link layer sometimes referred to as layer 2 used to send a TCRM 36 in the form of a layer 3 message. The TCRM could be sent over the L2 control channel, could be sent over a dedicated control channel (DCCH), or an associated control channel (ACCH). The TCRM 36 is forwarded by the network to the THD device 20. The dispatch call control functions of the iDEN™ system are controlled by the interaction of a DAP (Dispatch Application Processor) server, with the EBTSs (Enhanced Base Transceiver Stations) and the mobile devices. In an example implementation the combination of EBTSs and any intervening part of the network which forwards the TCRM 36 from the listener's RHD device 34 to the THD device 20 fulfills the role of network 39.

Once the THD device 20 receives the TCRM 36 from the network 39, an indication that another user has requested the transmit channel is generated on a user interface (UI) of the THD device 20. In the illustrated example, this is presented by shading an area 21 on the device 20 in THD mode. In some embodiments this takes the form of an alphanumeric indication on an LCD display, but other indications are also contemplated, including but not limited to vibrations originating in the device, audible alarms from a speaker, synthesized speech announcements, a UFMI (Urban Fleet Member Identifier) flashing on a visual display screen or appearing in a pop-up window on the screen. In some embodiments, information identifying the user making the request is included in the TCRM 36. This information could be, for example, a UFMI. This may be added to the TCRM message either by the RHD device itself or by the network. The THD device 20 may display the identity of the user's device which sent the request, which may take the form of the UFMI itself, or an alias stored in the THD device 20 for display in place of the UFMI. The display of this information provides to the talker an opportunity to choose to release the talk/transmit channel or to continue to talk and keep ownership of the talk/transmit channel.

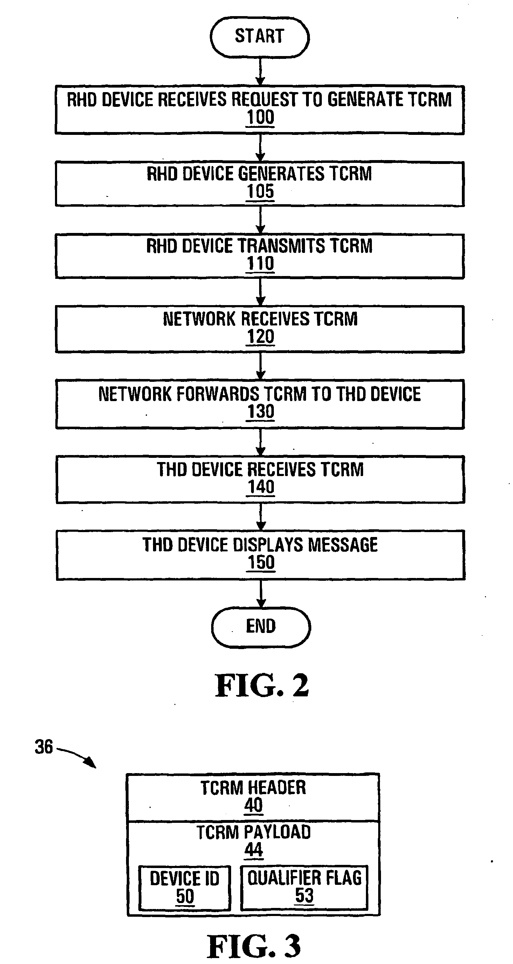

Referring now to Figure 2, steps performed by a system to implement transmit channel request messaging according to another embodiment of the invention will now be discussed.

At step 100, during an active session, an RHD device, for example RHD device 34 of Figure 1, of a listener locally receives a request to generate a TCRM. This could be an input initiated by the listener or initiated by an automated function local to the device. In response to this, at step 105, the RHD device generates a TCRM. In some preferred embodiments, the TCRM is generated if the listener presses, at a time during which the talker is speaking and the transmit channel is occupied, a PTT™ button or a button specifically designated for the TCRM. In a preferred embodiment, the TCRM is not generated at the RHD device unless the talk/transmit channel is occupied at that time, and moreover in another preferred embodiment, once the talk/transmit channel is released, any TCRMs in transit within the network will not be forwarded any farther towards the THD device. Other types of input mechanisms are also contemplated such as, but not limited to, selection from a menu of RHD device functions by keypad or input pen or by voice activation initiated by the listener. The RHD device then transmits the generated TCRM to the network at step 110. At step 120, the network receives the TCRM and forwards it to the appropriate THD device in step 130. The THD device receives the TCRM at step 140. The THD device then executes functionality in response to the receipt of the TCRM at step 150 which in a preferred embodiment includes generating a notification in the THD device which is user-detectable (i.e. by the talker) indicating that another user has requested the talk/transmit channel.

Although the TCRM is typically implemented for the purpose of indicating that the listener wishes to talk, the TCRM may also be used by a listener to simply request that the THD device release the talk/transmit channel. The notification preferably is made on an LCD or other visual display user interface (UI) and preferably includes an identification of the user requesting release of the channel as discussed above. In another example, an audible notification may be generated, for example, synthesized speech announcing to the user that the TCRM has been received, and preferably announcing the identification of the listener making the request. After the indication has been made to the user of the THD device, the system functionality associated with subsequent actions of the talker to release or keep the channel, and of the listener to commence a new talk period after the talk/transmit channel is free, is the same as that which occurs when talk/transmit channels are released and talk periods are initiated when no TCRM is sent or received.

In some embodiments, after the network receives the TCRM from the RHD device, the network (for example using a call processing server such as the DAP in the iDEN™ system) uses the device identifier in the TCRM to look up the current PTT™ group session in which the RHD device is participating. Alternatively, if the logical control channel used by the wireless device to transmit the TCRM is unique to that wireless device, the network can figure out which device sent the TCRM from the channel on which the TCRM was received. The call processing server then retrieves the group identification from the active group having the group session, and then armed with this information retrieves the device identification of the THD device. The identification of the THD device is then inserted into the header of the TCRM as is normally performed when the DAP forwards a Layer 3 message to a particular device. The TCRM is then properly forwarded to the THD device. The details of talk group list management and control are well documented and will not be elaborated upon here.

In some embodiments, the network performs appropriate filtering to reduce the number of TCRMs reaching the THD device. For example, in one embodiment, when multiple users send TCRMs, the network applies filtering to limit the number of TCRMs forwarded to the THD device or to limit the TCRMs forwarded to be only those TCRMs of specific users. In these embodiments, the network filters and forwards the TCRMs, preferably one at a time and in order. In other embodiments, when multiple users send TCRMs the network forwards all of the TCRM's to the THD device for storage in a queue, identifying the requesting user device or user in the order in which their respective TCRM was received. In these alternative embodiments, when more than one TCRM is received by the THD device, preferably the THD device user interface is arranged to display the user or device identification of each of the users or devices for which a TCRM was received at the THD device.

In some embodiments, receipt by the network of multiple messages from listening devices or the RHD device is dealt with. For example, in one embodiment when multiple TCRMs are sent by a single RHD device, only the first TCRM is forwarded to the THD device for a set flood protection duration during which time no further TCRMs are forwarded to the THD device. In some preferred embodiments, flood protection is performed by the RHD device of the listener, by being unresponsive to additional listener initiated requests to generate a TCRM, until the flood protection period has expired. Such an embodiment reduces the cost of additional traffic on the network which could otherwise result from TCRM flooding. In another embodiment, flood protection is performed by the network, which forwards the first TCRM to the THD device and filters, for example by deletion, any subsequent TCRM from the same RHD device within the flood protection duration thereafter. It should be noted that, in this particular embodiment, within the flood protection duration of one RHD device, another RHD device may independently send a TCRM to the THD device. Once the flood protection duration has expired, the network then is free to forward another single TCRM received from the RHD device. These particular embodiments advantageously protect the network from unwanted flooding by the excessive transmission of TCRM messages.

In an alternative embodiment, the TCRM is used to communicate a continual request status of the listener's wanting the talk/transmit channel, which is active while the listener wishes to talk and inactive when the listener does not wish to talk. In such a preferred alternative embodiment the listener activates the request status by pressing and holding a button, after which the listener may release the button to deactivate the request status after deciding he or she no longer wishes to talk. In this particular embodiment the THD device displays the indication (visually, audibly, or otherwise) either periodically or continually until the status of the continuous request changes to inactive.

Many different mechanisms involving the use of the TCRM may be used in accordance with this alternative embodiment, for example, in one embodiment the RHD device transmits a TCRM periodically to the THD device to maintain an active request status, and does not transmit the TCRM when an inactive status is desired. In this case, the THD device uses a time-out period longer than the periodicity of TCRM transmission in order to determine that the listener is indeed no longer requesting the talk/transmit channel. In accordance with alternative input mechanisms, a user could activate or deactivate the request status in any number of different ways, including but not limited to soft-keys, UI menu interface, and the existing PTT™ button. Other alternative ways of deactivating the request status include the RHD device sending a separate "cancel request message" to the THD device, or having the sending of any one TCRM toggle the request status, so that sending a second TCRM would suffice to deactivate the status.

In an alternative embodiment, a queue is utilized at the THD device to store information for multiple TCRMs received by the THD device in the order in which they arrived at the THD device. In this alternative embodiment, when a user deactivates a request status the user is removed from the ordered list of requesting users.

In some embodiments, during a single PTT™ talk session, the network forwards a preset number of TCRMs, the preset number being less than a preset threshold, and does not forward any more TCRMs until a new talk session is begun. In some embodiments the preset threshold is related to the capacity of a THD device to store and/or to display information of a maximum number of TCRMs. In alternate embodiments the threshold is set according to settings resident in the Network which may originate from an administrator or a carrier. In one embodiment, the preset threshold is one.

In some embodiments, the THD device is adapted to receive and display in real time every TCRM it receives regardless of its storage or display capacity, utilizing first in first out (FIFO) TCRM buffers, for rotating storage and/or display. In some embodiments the THD device is capable of displaying only one TCRM related message at any one time. In other embodiments, the THD device is capable of storing only one TCRM at any one time. In other embodiments the THD device is adapted to store a group of TCRMs, and adapted to display messages related to a subset of the group of TCRMs.

In some embodiments involving a queue, the THD device is adapted, such that once its FIFO buffers are filled to capacity, any additional TCRM received is simply ignored. In such an embodiment if an RHD device cancels a TCRM, the THD device is adapted to remove the relevant TCRM FIFO buffer entries so that the user display and data store may accept the next TCRM in the queue.

In other embodiments, the THD device is adapted to perform automated tasks in response to receiving the TCRM, for example by executing a stored algorithm. In such an embodiment, the system could be set up, for example, such that in response to receiving a TCRM 36 with a UFMI of a certain value, the THD device would cause the talk/transmit channel to be released automatically. In general, the use to which the TCRM is put by the THD device may be other than solely for the display of information with respect to a request for the talk/transmit channel.

In other embodiments, a receiving device which participates in calls of a PTT™ group may be automated to make important voice announcements to the group. In this embodiment, if the listening automated device needs to make an announcement during an active session, at step 110 it may send a TCRM message to the THD device whose user could respond to the request by releasing the talk/transmit channel so that the automated device may make the announcement to the group.

In yet another embodiment, the sending and processing of the TCRM may be automated or partially automated at both the RHD device and the THD device.

The TCRM and transmit channel request messaging method and system may be adapted for and used in any number of applications in a PTT™ or any other walkie-talkie-like or half-duplex voice communication system which would benefit from the capability of an RHD device to send to the THD device, a request for the transmit channel being held by the THD device. The reasons for sending the message and hence the functionality, if any, in response to the THD device's receipt of the TCRM will depend upon the use to which the transmit channel request messaging is put in the particular system in which it is implemented.

Referring to FIG. 3, an example TCRM data structure in accordance with a further embodiment of the invention will now be discussed. It is to be clearly understood this is but one example. Any appropriate message format can be employed. For example, in a POC implementation, a DTMF tone may be used to request the talk channel. This DTMF tone is interpreted by the network as a TCRM, and a message identifying the wireless device is sent to the THD device. It is also to be understood that in a most simple embodiment, the TCRM is simply the same message that would be generated when a user presses the "talk" button when the transmit channel is available. It is interpreted as a TCRM by the network if the transmit channel is occupied.

The example TCRM 36 is a datagram consisting of a header 40 and a payload 44. Depending upon the implementation of the system, the header 40 or the payload 44 could be indicative that the message is a request for the talk/transmit channel, and that it should be forwarded to the transmitting device of the active session. The identity of the device making the request would preferably form part of the payload 44 as a device ID 50. In the iDEN™ system the payload preferably includes the UFMI of the receiving device. This can be used to identify the receiving device which has sent the request. In some embodiments, the payload includes a TCRM qualifier flag 53 which is used for extended functionality. In such an embodiment TCRM handling is further customized by the DAP or THD device performing different functionality. The TCRM qualifier flag 53 contains information which may be indicative of, but not limited to the following: a state of the RHD device, the nature of the call, or the nature of the TCRM. In a specific preferred embodiment, the qualifier flag 53 may exhibit one of four machine readable values which indicate the following: Flag value 1 - RHD device making talk channel request; Flag value 2 - RHD device making a continuous talk channel request; Flag value 3 - RHD device terminating/canceling previous request; Flag value 4 - RHD device making high priority request for talk channel.

In some embodiments, Flag value 1 is a default value for non-extended functionality of the TCRM. In such a case the THD device treats the TCRM the same way as it would treat a TCRM with no qualifier flag 53. In other embodiments Flag value 2 is a value to indicate that until the THD device receives a subsequent terminating or canceling request from the RHD device, the current transmit channel request of the TCRM containing the qualifier flag 53 stands. Flag value 3 is used to instruct the THD device that a previous request is cancelled, and therefore that the RHD device is no longer requesting the transmit channel. Flag value 4 enables the THD device to override the talker's choice to continue to occupy the transmit channel, the result of which is the automatic release by the THD device and hence the network, of the transmit channel. In a preferred embodiment not all devices have Flag value 4 as one of its TCRM qualifiers, in such a system classes of services are provided to differentiate between devices which can and cannot send TCRMs with Flag value 4 in the payload. In some embodiments, classes of services are registered on a DAP and managed thereby. In an embodiment capable of using Flag value 4, a mediator or administrator of a group, having a device capable of sending Flag value 4 in its TCRM would be able to interrupt the talker and possess the transmit channel.

It should be understood that the particular structures and values of the qualifier flag 53 will depend upon the particular context in which the TCRM is used. The discussion above regarding four specific flags, and the four specific resulting kinds of functionality performed in response thereto, should be understood to constitute a discussion of an example only of the possible numbers, structures, and values of qualifier flags and possible types of functionality associated therewith.

Referring again to the TCRM header 40, the header includes standard routing protocol and other headers required to transmit the message appropriately to the network, which ensures that it is forwarded to the proper THD device of the active session in which the RHD device is participating. In some embodiments adapted to the iDEN™ standard, the header 40 includes standard dispatch call control headers such as a protocol discriminator header, a transaction identifier header, and a transaction identifier flag header. In some embodiments another header "message type" is set to a value which is representative of the type of message being a TCRM. This may be the same value for incoming and outgoing TCRMs or may be set differently to distinguish between incoming and outgoing TCRMs. In some embodiments, the TCRM has a different structure when it is inbound from when it is outbound.

In some embodiments the header of an incoming TCRM does not include a target UFMI of the THD device since the RHD device may not be aware of this. The network is capable of determining the THD device of the talk group in which the RHD device is participating. In some embodiments the header of an outgoing TCRM includes a target UFMI or other identification of the THD device in order for the network to forward it to the THD device. In some embodiments an outbound TCRM and an inbound TCRM have the same structure. In such embodiments, the inbound TCRM does not have an identification of the target THD device in the dispatch call control header. Space may be reserved in the TCRM for the dispatch call control header as it would be used in an outgoing TCRM. Depending upon the particular use to which the TCRM is put, and the particular system in which it is implemented, the structure of the TCRM datagram may change. The TCRM in a particular context preferably is such that it is sufficient when received by the THD device to notify the THD device that the talk/transmit channel is requested.

In some embodiments, the TCRM is simply broadcast. The THD device, being the only device in THD mode, will recognize the message as being for itself. In other embodiments, the TCRM is broadcast and contains an identifier of the THD device. In other embodiments the TCRM is sent on a device specific channel to the THD device in which case the identifier of the THD device might be required.

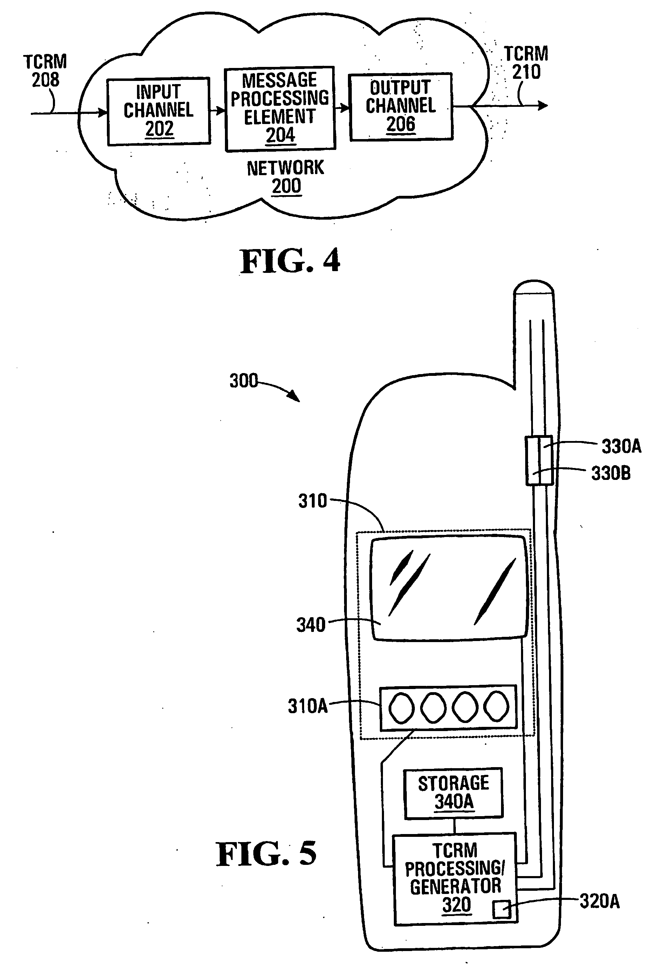

Referring now to Figure 4, shown is a very schematic diagram of a network adapted to provide the TCRM functionality. The network is generally indicated at 200. This functionality might for example include the functionality represented by links 25 and network 39 of Figure 1. The network provides wireless half duplex communications to accessing devices which may be wireless. The network 200 is shown having input channel 202 through which it is capable of receiving wirelessly the TCRM 208. This input channel can be any appropriate channel over which communications between a listening device and the network can take place. This might initially take place for example in a base station. Also shown within the network 200 is a message processing element 204. This element processes the incoming TCRM message 208, and determines where the message should be forwarded, namely to the device in the same talk group as the device that generated the TCRM 208 that is currently in the transmitting or talking mode. The message processing element 204 can be implemented in a single location within the network 200 or in a distributed manner. In a preferred embodiment, this is implemented within a call processing controller such as a DAP. The network 200 also has an output channel 206 through which is transmitted the TCRM 210 towards the device which is in talking mode. In a typical instance, the input channel 202, the message processing element 204 and the output channel 206 would be in different components within the network 200. However, this is not essential. One or more of these elements/functionalities might be included within a single network element within the network 200.

Although the example embodiments illustrated herein describe transmit channel request messaging and a TCRM which is specifically tailored to PTT™ over the dispatch service of the iDEN™ system, in general the invention should be understood as not being limited thereto and therefor applicable to other systems which support but are not limited to, half-duplex voice communication, such as 1xRTT CDMA, UMTS, GSM/GPRS, and TDMA.

Referring to Figure 5, an example implementation of a PTT capable wireless device 300 provided by an embodiment of the invention, will now be discussed.

Wireless device 300 is a wireless device modified by the implementation of functional elements provided in accordance with an embodiment of the invention.

In the embodiment depicted in Figure 5, an input mechanism/request receiver 310 includes a keypad 310a, and a touchscreen 340. Other embodiments could include any other suitable local input element and in some embodiments the wireless device 300 has a display screen instead of a touchscreen 340. The input mechanism/request receiver 310 is coupled to a TCRM processing/generator 320. The TCRM processing/generator 320 includes extended processing functions 320a which includes features such as filtering and flood protection. These functions are not necessarily present in other embodiments. The TCRM processing/generator 320 is coupled to message transmission element 330a. The message transmission element 330a may share resources with a message reception element 330b. The message reception element 330b is coupled to the TCRM processing/generator 320. A storage element 340a and a display element in the form of a touchscreen 340 are each coupled to the TCRM processing/generator 320.

With respect to function, the wireless device 300 depicted in Figure 5 is able to operate in THD mode and RHD mode.

While in RHD mode, the wireless device is able to receive input from the input mechanism/request receiver 310 by way of the keypad 310a and/or the touchscreen 340. These are provided to the listener to initiate the sending of a TCRM to a THD device while the wireless device 300 is in RHD mode. Once the request is input, the TCRM processing/generator 320 generates a TCRM including the identification of the wireless device 300 and forwards it through the message transmission element 330a over a logical control channel to a network (not shown).

While in TDH mode, the wireless device is able to receive a TCRM from the network over the message reception element 330b. The TCRM is input to the TCRM processing/generator 320, where it is processed for any required extra functionality, and a copy of which is saved in storage element 340a. Any necessary conversion of the information in the TCRM into human readable form is executed and the resulting indication displayed on the touchscreen 340.

In other embodiments, the TCRM processing/generator 320, storage 340a and input mechanism/request receiver 310 cooperate to provide functionality associated with other embodiments described herein above. A specific example of a PTT™ wireless device has been given. More generally, embodiments of the invention are applicable to any wireless devices capable of participating in network provided walkie-talkie-like communication, which is further equipped with the capacity to send and receive and process TCRMs in a form suitable for a given implementation.

In other embodiments, the method, system, and device are adapted to provide peripheral support for wired devices to participate in a wireless call via a network interworking function, so that although the devices are not within the wireless network, they appear as though they are, and are able to participate therein. Hence, according to this embodiment, not all of the devices in a PTT™ group are wireless, and transmit channel request messaging occurs in an analogous manner to that described hereinabove in PTT™ groups where one or more of the devices is a stationary or otherwise non-mobile wired device. Hence, a wireless PTT™ session may have wired or landline based devices participating in the PTT™ session in accordance with the embodiments, adapted to transmit and receive messages for transmit channel request messaging.

Numerous modifications and variations of the present invention are possible in light of the above teachings. It is therefore to be understood that within the scope of the appended claims, the invention may be practised otherwise than as specifically described herein.

## Claims

1. A method of messaging during an active half-duplex session (10) between a plurality of user devices (20,30,34) communicating using a network delivered half duplex voice communication functionality, the method comprising:
a receiving-in-half-duplex device (34) of said plurality of user devices (20,30,34) receiving a voice communication in a half-duplex mode for the active half-duplex session (10), and transmitting (110) a transmit channel request message (36); wherein
a transmitting-in-half-duplex device (20) of said plurality of user devices is transmitting the voice communication in half-duplex mode for the active half-duplex session (10), and is receiving (140) the transmit channel request message (36);
wherein:
the network (39,200) receives the transmit channel request message (36) from the receiving-in-half-duplex device (34), determines which of the plurality of user devices (20,30,34) is the transmitting-in-half-duplex device (20), and forwards (130) the transmit channel request message (36) to the transmitting in half-duplex device (20); and
the network (39, 200) receives the voice communication from the transmitting-in-half-duplex device (20) and forwards the voice communication to the receiving-in-half-duplex device (34); and
wherein only a first transmit channel request message (36) from the receiving-in-half-duplex device (34) is sent to the transmitting-in-half-duplex device (20) for a set flood protection duration.

2. A method according to claim 1 wherein a plurality of receiving-in-half-duplex devices (34) receive the voice communication in a half-duplex mode for the active half-duplex session (10) from the network (39, 200).

3. A method according to claim 2 wherein the voice communication comprises voice data packets which are duplicated and routed to the plurality of receiving-in-half-duplex devices (34) by the network (39, 200).

4. A method according to any one of claims 1 to 3 wherein each user device (20,30,34) of the plurality of user devices (20,30,34) is a wireless device (300).

5. A method according to any one of claims 1 to 5 further comprising the receiving-in-half-duplex device (34) receiving (100) a request to transmit the transmit channel request message (36) either as an input initiated by a listener of the first user device (34) or initiated by an automated function local to the first user device (34).

6. A method according to any one of claims 1 to 5 wherein the active half-duplex session (10) is a voice communication session compliant with at least one wireless communications system selected from the group of iDEN, 1XRTT CDMA, GSM/GPRS, UMTS, and TDMA.

7. A method according to any one of claims 1 to 6 further comprising:
including an identification of the receiving-in-half-duplex device (34) in the transmit channel request message (36) at least when the transmit channel request message (36) is forwarded to the transmitting-in-half-duplex device (20).

8. A method according to claim 7 further comprising:
the transmitting-in-half-duplex device (20) generating (150) a user-detectable notification that a receiving-in-half-duplex device (34) has requested control of the transmit channel and indicative of the identification of the transmitting-in-half-duplex device (34).

9. A method according to any one of claims 1 to 8 further comprising:
the network (39,200), upon receiving (120) the transmit channel request message (36) from the receiving-in-half-duplex device (34), determining a talk group the receiving-in-half-duplex device (34) is participating in, determining another user device in the talk group that is transmitting in half duplex mode, which another user device is said transmitting-in-half-duplex device (20).

10. A method according to any one of claims 1 to 9 further comprising:
including a qualifier flag in the transmit channel request message (36) at least when the transmit channel request message (36) is forwarded to the transmitting-in-half-duplex device (20).

11. A method according to claim 10 further comprising performing extended functionality in response to a value of the qualifier flag, the extending functionality comprising at least one functionality selected from the group consisting of:
registering a continuing transmit channel request at the transmitting-in-half-duplex device (20);
cancelling a transmit channel request at the transmitting-in-half-duplex device (20); and
performing automatic release of the transmit channel by the transmitting-in-half-duplex device (20).

12. A user device (300) adapted to communicate using a network delivered half duplex voice communication functionality to participate in an active half-duplex session (10), the user device (300) comprising:
means for receiving (310) an external input from a user requesting the user device to transmit an outgoing transmit channel request message (36);
means for transmitting (330a) the outgoing transmit channel request message (36) responsive to the request;
means for receiving (330b) an incoming transmit channel request message (36) while the user device is in transmit half-duplex mode;
wherein:
the user device is arranged to communicate with the network for receiving and transmitting both the transmit channel request message (36) and a voice communication in a half duplex mode for an active half-duplex session (10); and
the user device further comprises means for generating (150) a user-detectable notification that another user device has requested control of the transmit channel in response to receiving the incoming transmit channel request message (36); and
wherein the user device is adapted to operate with the network such that only a first transmit channel request message (36) from the user device (34) is sent to a transmitting-in-half-duplex device (20) for a set flood protection duration.

13. A user device (300) according to claim 12 wherein the voice communication comprises voice data packets which are routed to and from the network (39, 200) via a base station of the network (39, 200).

14. A user device (300) according to claim 12 or claim 13 comprising a button (310A) to allow the user to control the sending of requests to acquire and release the transmit channel, these requests being sent over a logical control channel to the network (39,200).

15. A user device (300) according to any one of claims 12 to 14 wherein the received transmit channel request message (36) comprises an identification of another user device which originally sent the received transmit channel request message (36) and wherein the notification comprises the identification.

16. A user device (300) according to any one of claims 12 to 15 wherein the outgoing transmit control request message (36) comprises an identification of the user device (300).

17. A user device (300) according to any one of claims 12 to 16 wherein the incoming transmit control request message (36) comprises a qualifier flag, and wherein the user device (300) is adapted to perform extended functionality in response to a value of the qualifier flag of the transmit control request message (36), comprising at least one functionality selected from the group consisting of:
registering a continuing transmit channel request;
cancelling a previously received transmit channel request; and
performing automatic release of the transmit channel.

18. A user device (300) according to any one of claims 12 to 17 wherein the outgoing transmit channel request message (36) comprises a qualifier flag, and wherein the value of the qualifier flag of the transmit channel request message (36) is indicative of a request for the performance of extended functionality comprising at least one functionality selected from the group consisting of:
registering a continuing transmit channel request at the device in the transmitting in half-duplex mode;
cancelling a previously received transmit channel request at the device in the transmitting in half-duplex mode; and
performing automatic release of the transmit channel by the device in the transmitting in half-duplex mode.

19. A network (39,200) adapted to facilitate an active half-duplex session involving a plurality of user devices (20,30,34) using a network delivered half duplex voice communication functionality, the network (39,200) comprising:
a message processing element (204) adapted to forward a transmit channel request message (36) from a receiving in half-duplex device of the plurality of user devices (20,30,34) to a transmitting in half duplex device (20) of the plurality of user devices (20,30,34) by:
receiving (120) the transmit channel request message (36) over an input channel (202) from the receiving in half-duplex device;
determining which of the plurality of user devices (20,30,34) is the transmitting in half-duplex device (20) based on the transmit channel request message (36); and
transmitting (130) the transmit channel request message (36) over an output channel (206) to the transmitting-in-half-duplex device (20);
wherein said network (39, 200) is adapted to forward only a first transmit channel request message (36) from the receiving-in-half-duplex device (34) to the transmitting-in-half-duplex device (20) for a set flood protection duration.

20. A system comprising a plurality of user devices (20,30,34) according to any one of claims 12 to 18 in combination with a network (39,200) according to claim 19.

## Patentansprüche

1. Verfahren zur Nachrichtenübertragung während einer aktiven Halbduplex-Sitzung (10) zwischen einer Vielzahl von Benutzergeräten (20, 30, 34), die mithilfe einer netzweit bereitgestellten Halbduplex-Sprachkommunikationsfunktionalität kommunizieren, das Verfahren umfassend:
ein Empfangend-in-Halbduplex-Gerät (34) aus der Vielzahl von Benutzergeräten (20, 30, 34), das eine Sprachkommunikation in einem Halbduplex-Modus für die aktive Halbduplex-Sitzung (10) empfängt und eine Übertragungskanal-Anforderungsnachricht (36) überträgt (110);
**gekennzeichnet durch**:
ein Übertragend-in-Halbduplex-Gerät (20) aus der Vielzahl von Benutzergeräten, das die Sprachkommunikation im Halbduplex-Modus für die aktive Halbduplex-Sitzung (10) empfängt und die Übertragungskanal-Anforderungsnachricht (36) empfängt (140);
wobei:
das Netz (39, 200) die Anforderungsnachricht für einen Übertragungskanal (36) von dem Empfangend-in-Halbduplex-Gerät (34) empfängt, ermittelt, welches aus der Vielzahl von Benutzergeräten (20, 30, 34) das Übertragend-in-Halbduplex-Gerät (20) ist, und die Übertragungskanal-Anforderungsnachricht (36) zu dem Übertragend-in-Halbduplex-Gerät (20) weiterleitet (130); und
das Netz (39, 200) die Sprachkommunikation von dem Übertragend-in-Halbduplex-Gerät (20) empfängt und die Sprachkommunikation zu dem Empfangend-in-Halbduplex-Gerät (34) weiterleitet; und
wobei für eine festgelegte Überflutungsschutzdauer nur eine erste Übertragungskanal-Anforderungsnachricht (36) von dem Empfangend-in-Halbduplex-Gerät (34) zu dem Übertragend-in-Halbduplex-Gerät (20) gesendet wird.

2. Verfahren gemäß Anspruch 1, wobei eine Vielzahl von Empfangend-in-Halbduplex-Geräten (34) die Sprachkommunikation in einem Halbduplex-Modus für die aktive Halbduplex-Sitzung (10) von dem Netz (39, 200) empfängt.

3. Verfahren gemäß Anspruch 2, wobei die Sprachkommunikation Sprachdatenpakete umfasst, die durch das Netz (39, 200) dupliziert und zu der Vielzahl von Empfangend-in-Halbduplex-Geräten (34) geleitet werden.

4. Verfahren gemäß einem der Ansprüche 1 bis 3, wobei jedes Benutzergerät (20, 30, 34) aus der Vielzahl von Benutzergeräten (20, 30, 34) ein Drahtlosgerät (300) ist.

5. Verfahren gemäß einem der Ansprüche 1 bis 5, des Weiteren umfassend, das Empfangend-in-Halbduplex-Gerät (34) empfangend (100) einer Anforderung zur Übertragung der Übertragungskanal-Anforderungsnachricht (36), entweder als eine durch einen Hörer des ersten Benutzergeräts (34) initiierte Eingabe oder initiiert durch eine automatische Funktion, die für das erste Benutzergerät (34) lokal ist.

6. Verfahren gemäß einem der Ansprüche 1 bis 5, wobei die aktive Halbduplex-Sitzung (10) eine Sprachkommunikationssitzung ist, die mit mindestens einem Drahtloskommunikationssystem konform ist, das aus der Gruppe von iDEN, 1 XRTT CDMA, GSM/GPRS, UMTS und TDMA ausgewählt ist.

7. Verfahren gemäß einem der Ansprüche 1 bis 6, des Weiteren umfassend:
das Einschließen einer Identifikation des Empfangend-in-Halbduplex-Geräts (34) in die Übertragungskanal-Anforderungsnachricht (36) zumindest dann, wenn die Übertragungskanal-Anforderungsnachricht (36) zu dem Übertragend-in-Halbduplex-Gerät (20) weitergeleitet wird.

8. Verfahren gemäß Anspruch 7, des Weiteren umfassend:
das Übertragend-in-Halbduplex-Gerät (20) erzeugend (150) eine benutzerfeststellbare Benachrichtigung, dass ein Empfangend-in-Halbduplex-Gerät (34) die Steuerung des Übertragungskanals angefordert hat, und die indikativ ist für die Identifikation des Übertragend-in-Halbduplex-Geräts (34).

9. Verfahren gemäß einem der Ansprüche 1 bis 8, des Weiteren umfassend:
das Netz (39, 200), beim Empfangen (120) der Übertragungskanal-Anforderungsnachricht (36) von dem Empfangend-in-Halbduplex-Gerät (34), ermittelnd eine Sprechgruppe, an der das Empfangend-in-Halbduplex-Gerät (34) gerade beteiligt ist, ermittelnd eines anderen Benutzergeräts in der Sprechgruppe, das gerade im Halbduplex-Modus überträgt, wobei das andere Benutzergerät das Übertragend-in-Halbduplex-Gerät (20) ist.

10. Verfahren gemäß einem der Ansprüche 1 bis 9, des Weiteren umfassend:
das Einschließen eines Qualifizierungs-Flags in die Übertragungskanal-Anforderungsnachricht (36) zumindest dann, wenn die Übertragungskanal-Anforderungsnachricht (36) zu dem Übertragend-in-Halbduplex-Gerät (20) weitergeleitet wird.

11. Verfahren gemäß Anspruch 10, des Weiteren umfassend die Durchführung von erweiterter Funktionalität als Reaktion auf einen Wert des Qualifizierungs-Flags, wobei die erweiterte Funktionalität zumindest eine der Funktionalitäten umfasst, die aus der folgenden Gruppe ausgewählt sind:
Registrieren einer andauernden Übertragungskanalanforderung bei dem Übertragend-in-Halbduplex-Gerät (20);
Abbrechen einer Übertragungskanalanforderung bei dem Übertragend-in-Halbduplex-Gerät (20); und
Durchführen der automatischen Freigabe des Übertragungskanals durch das Übertragend-in-Halbduplex-Gerät (20).

12. Benutzergerät (300), angepasst zum Kommunizieren mithilfe einer netzweit bereitgestellten Halbduplex-Sprachkommunikationsfunktionalität zur Teilnahme an einer aktiven Halbduplex-Sitzung (10), das Benutzergerät (300) umfassend:
Mittel zum Empfangen (310) einer externen Eingabe von einem Benutzer, der anfordert, dass das Benutzergerät eine abgehende Übertragungskanal-Anforderungsnachricht (36) überträgt;
Mittel zum Übertragen (330a) der abgehenden Übertragungskanal-Anforderungsnachricht (36) als Reaktion auf die Anforderung;
**gekennzeichnet durch**
Mittel zum Empfangen (330b) einer eingehenden Übertragungskanal-Anforderungsnachricht (36), während sich das Benutzergerät im Übertragungs-Halbduplex-Modus befindet;
wobei:
das Benutzergerät dazu eingerichtet ist, mit dem Netz zu kommunizieren, um sowohl die Übertragungskanal-Anforderungsnachricht (36) als auch eine Sprachkommunikation in einem Halbduplex-Modus für eine aktive Halbduplex-Sitzung (10) zu empfangen und zu übertragen; und
das Benutzergerät des Weiteren Mittel zum Erzeugen (150) einer benutzerfeststellbare Benachrichtigung umfasst, dass ein anderes Benutzergerät als Reaktion auf das Empfangen der eingehenden Übertragungskanal-Anforderungsnachricht (36) die Steuerung des Übertragungskanals angefordert hat; und
wobei das Benutzergerät dazu angepasst ist, so mit dem Netz zu operieren, dass für eine festgelegte Überflutungsschutzdauer nur eine erste Übertragungskanal-Anforderungsnachricht (36) von dem Benutzergerät (34) zu einem Übertragend-in-Halbduplex-Gerät (20) gesendet wird.

13. Benutzergerät (300) gemäß Anspruch 12, wobei die Sprachkommunikation Sprachdatenpakete umfasst, die über eine Basisstation des Netzes (39, 200) zu und von dem Netz (39, 200) geleitet werden.

14. Benutzergerät (300) gemäß Anspruch 12 oder Anspruch 13, umfassend eine Taste (310a), um dem Benutzer die Steuerung des Sendens von Anforderungen zum Erhalt und zur Freigabe des Übertragungskanals zu ermöglichen, wobei diese Anforderungen über einen logischen Steuerkanal zu dem Netz (39, 200) gesendet werden.

15. Benutzergerät (300) gemäß einem der Ansprüche 12 bis 14, wobei die empfangene Übertragungskanal-Anforderungsnachricht (36) eine Identifikation eines anderen Benutzergeräts umfasst, welches die empfangene Übertragungskanal-Anforderungsnachricht (36) ursprünglich gesendet hat, und wobei die Benachrichtigung die Identifikation umfasst.

16. Benutzergerät (300) gemäß einem der Ansprüche 12 bis 15, wobei die abgehende Übertragungssteuerungs-Anforderungsnachricht (36) eine Identifikation des Benutzergeräts (300) umfasst.

17. Benutzergerät (300) gemäß einem der Ansprüche 12 bis 16, wobei die eingehende Übertragungssteuerungs-Anforderungsnachricht (36) ein Qualifizierungs-Flag umfasst, und wobei das Benutzergerät (300) dazu angepasst ist, als Reaktion auf einen Wert des Qualifikations-Flags der Übertragungssteuerungs-Anforderungsnachricht (36) erweiterte Funktionalität durchzuführen, welche zumindest eine der Funktionalitäten umfasst, die aus der folgenden Gruppe ausgewählt sind:
Registrieren einer andauernden Übertragungskanalanforderung;
Abbrechen einer zuvor empfangenen Übertragungskanalanforderung; und
Durchführen der automatischen Freigabe des Übertragungskanals.

18. Benutzergerät (300) gemäß einem der Ansprüche 12 bis 17, wobei die abgehende Übertragungskanal-Anforderungsnachricht (36) ein Qualifizierungs-Flag umfasst, und wobei der Wert des Qualifikations-Flags der Übertragungskanal-Anforderungsnachricht (36) indikativ für eine Anforderung zur Durchführung von erweiterter Funktionalität ist, welche zumindest eine der Funktionalitäten umfasst, die aus der folgenden Gruppe ausgewählt sind:
Registrieren einer andauernden Übertragungskanalanforderung bei dem im Halbduplex-Modus übertragenden Gerät;
Abbrechen einer zuvor empfangenen Übertragungskanalanforderung bei dem im Halbduplex-Modus übertragenden Gerät; und
Durchführen der automatischen Freigabe des Übertragungskanals durch das im Halbduplex-Modus übertragende Gerät.

19. Netz (39, 200), das dazu angepasst ist, mithilfe einer netzweit bereitgestellten Halbduplex-Sprachkommunikationsfunktionalität eine aktive Halbduplex-Sitzung einzurichten, an der eine Vielzahl von Benutzergeräten (20, 30, 34) beteiligt sind, das Netz (39, 200) **gekennzeichnet durch**:
ein Nachrichtenverarbeitungselement (204), angepasst zum Weiterleiten einer Übertragungskanal-Anforderungsnachricht (36) von einem Empfangend-in-Halbduplex-Gerät aus der Vielzahl von Benutzergeräten (20, 30, 34) zu einem Übertragend-in-Halbduplex-Gerät (20) aus der Vielzahl von Benutzergeräten (20, 30, 34) **durch**:
Empfangen (120) der Übertragungskanal-Anforderungsnachricht (36) über einen Eingangskanal (202) von dem Empfangend-in-Halbduplex-Gerät;
Ermitteln, welches aus der Vielzahl der Benutzergeräte (20, 30, 34) das Übertragend-in-Halbduplex-Gerät (20) ist auf der Basis der Übertragungskanal-Anforderungsnachricht (36); und
Übertragen (130) der Übertragungskanal-Anforderungsnachricht (36) über einen Eingangskanal (206) zu dem Übertragend-in-Halbduplex-Gerät (20);
wobei das Netz (39, 200) dazu angepasst ist, für eine festgelegte Überflutungsschutzdauer nur eine erste Übertragungskanal-Anforderungsnachricht (36) von dem Empfangend-in-Halbduplex-Gerät (34) zu dem Übertragend-in-Halbduplex-Gerät (20) weiterzuleiten.

20. System, **gekennzeichnet durch** eine Vielzahl von Benutzergeräten (20, 30, 34) gemäß einem der Ansprüche 12 bis 18 in Kombination mit einem Netz (39, 200) gemäß Anspruch 19.

## Revendications

1. Un procédé de messagerie durant une session semi-duplex active (10) entre une pluralité de dispositifs d'utilisateur (20, 30, 34) communiquant à l'aide d'une fonctionnalité de communication vocale semi-duplex délivrée par réseau, le procédé comportant :
un dispositif de réception en semi-duplex (34) de ladite pluralité de dispositifs d'utilisateur (20, 30, 34) recevant une communication vocale dans un mode semi-duplex pendant la session semi-duplex active (10), et transmettant (110) un message de demande de canal de transmission (36) ; **caractérisé par**
un dispositif de transmission en semi-duplex (20) de ladite pluralité de dispositifs d'utilisateur transmettant la communication vocale en mode semi-duplex pendant la session semi-duplex active (10), et recevant (140) le message de demande de canal de transmission (36) ;
dans lequel :
le réseau (39, 200) reçoit le message de demande de canal de transmission (36) du dispositif de réception en semi-duplex (34), détermine quel dispositif parmi la pluralité de dispositifs d'utilisateur (20, 30, 34) est le dispositif de transmission en semi-duplex (20), et transfère (130) le message de demande de canal de transmission (36) au dispositif de transmission en semi-duplex (20) ; et
le réseau (39, 200) reçoit la communication vocale du dispositif de transmission en semi-duplex (20) et transfère la communication vocale au dispositif de réception en semi-duplex (34) ; et
dans lequel seul un premier message de demande de canal de transmission (36) du dispositif de réception en semi-duplex (34) est envoyé au dispositif de transmission en semi-duplex (20) pendant une durée de protection contre les inondations fixée.

2. Un procédé selon la revendication 1 dans lequel une pluralité de dispositifs de réception en semi-duplex (34) reçoivent la communication vocale dans un mode semi-duplex pendant la session semi-duplex active (10) du réseau (39, 200).

3. Un procédé selon la revendication 2 dans lequel la communication vocale comporte des paquets de données vocales qui sont dupliqués et routés vers la pluralité de dispositifs de réception en semi-duplex (34) par le réseau (39, 200).

4. Un procédé selon n'importe laquelle des revendications 1 à 3 dans lequel chaque dispositif d'utilisateur (20, 30, 34) de la pluralité de dispositifs d'utilisateur (20, 30, 34) est un dispositif sans fil (300).

5. Un procédé selon n'importe laquelle des revendications 1 à 5 comportant de plus le dispositif de réception en semi-duplex (34) recevant (100) une demande de transmission du message de demande de canal de transmission (36) sous la forme d'une entrée déclenchée soit par un auditeur du premier dispositif d'utilisateur (34), soit par une fonction automatisée locale sur le premier dispositif d'utilisateur (34).

6. Un procédé selon n'importe laquelle des revendications 1 à 5 dans lequel la session semi-duplex active (10) est une session de communication vocale conforme à au moins un système de communication sans fil sélectionné dans le groupe comprenant :
iDEN, 1XRTT CDMA, GSM/GPRS, UMTS, et TDMA.

7. Un procédé selon n'importe laquelle des revendications 1 à 6 comportant de plus :
l'inclusion d'une identification du dispositif de réception en semi-duplex (34) dans le message de demande de canal de transmission (36) au moins lorsque le message de demande de canal de transmission (36) est transféré au dispositif de transmission en semi-duplex (20).

8. Un procédé selon la revendication 7 comportant de plus :
le dispositif de transmission en semi-duplex (20) générant (150) une notification détectable par l'utilisateur qu'un dispositif de réception en semi-duplex (34) a demandé le contrôle du canal de transmission et indicatrice de l'identification du dispositif de transmission en semi-duplex (34).

9. Un procédé selon n'importe laquelle des revendications 1 à 8 comportant de plus :
le réseau (39, 200), après réception (120) du message de demande de canal de transmission (36) du dispositif de réception en semi-duplex (34), déterminant un groupe d'appel auquel le dispositif de réception en semi-duplex (34) participe, déterminant un autre dispositif d'utilisateur dans le groupe d'appel qui transmet en mode semi-duplex, lequel autre dispositif d'utilisateur est ledit dispositif de transmission en semi-duplex (20).

10. Un procédé selon n'importe laquelle des revendications 1 à 9 comportant de plus :
l'inclusion d'un drapeau qualificatif dans le message de demande de canal de transmission (36) au moins lorsque le message de demande de canal de transmission (36) est transféré au dispositif de transmission en semi-duplex (20).

11. Un procédé selon la revendication 10 comportant de plus l'exécution d'une fonctionnalité étendue en réponse à une valeur du drapeau qualificatif, la fonctionnalité étendue comportant au moins une fonctionnalité sélectionnée dans le groupe composé de :
l'enregistrement d'une demande de canal de transmission de continuation au niveau du dispositif de transmission en semi-duplex (20) ;
l'annulation d'une demande de canal de transmission au niveau du dispositif de transmission en semi-duplex (20) ; et
l'exécution d'une libération automatique du canal de transmission par le dispositif de transmission en semi-duplex (20).

12. Un dispositif d'utilisateur (300) adapté pour communiquer à l'aide d'une fonctionnalité de communication vocale semi-duplex délivrée par réseau afin de participer à une session semi-duplex active (10), le dispositif d'utilisateur (300) comportant :
des moyens pour recevoir (310) une entrée externe d'un utilisateur demandant au dispositif d'utilisateur de transmettre un message de demande de canal de transmission sortant (36) ;
des moyens pour transmettre (330a) le message de demande de canal de transmission sortant (36) en réponse à la demande ; **caractérisé par**
des moyens pour recevoir (330b) un message de demande de canal de transmission entrant (36) pendant que le dispositif d'utilisateur est en mode de transmission semi-duplex ;
dans lequel :
le dispositif d'utilisateur est agencé afin de communiquer avec le réseau pour recevoir et transmettre à la fois le message de demande de canal de transmission (36) et une communication vocale dans un mode semi-duplex pendant une session semi-duplex active (10) ; et
le dispositif d'utilisateur comporte de plus des moyens pour générer (150) une notification détectable par l'utilisateur qu'un autre dispositif d'utilisateur a demandé un contrôle du canal de transmission en réponse à la réception du message de demande de canal de transmission entrant (36) ; et
dans lequel le dispositif d'utilisateur est adapté pour fonctionner avec le réseau de telle sorte que seul un premier message de demande de canal de transmission (36) du dispositif d'utilisateur (34) est envoyé à un dispositif de transmission en semi-duplex (20) pendant une durée de protection contre les inondations fixée.

13. Un dispositif d'utilisateur (300) selon la revendication 12 dans lequel la communication vocale comporte des paquets de données vocales qui sont routés vers et depuis le réseau (39, 200) par l'intermédiaire d'une station de base du réseau (39, 200).

14. Un dispositif d'utilisateur (300) selon la revendication 12 ou la revendication 13 comportant un bouton (310A) afin de permettre à l'utilisateur de contrôler l'envoi de demandes pour acquérir et libérer le canal de transmission, ces demandes étant envoyées sur un canal de contrôle logique au réseau (39, 200).

15. Un dispositif d'utilisateur (300) selon n'importe laquelle des revendications 12 à 14 dans lequel le message de demande de canal de transmission reçu (36) comporte une identification d'un autre dispositif d'utilisateur qui a initialement envoyé le message de demande de canal de transmission reçu (36) et dans lequel la notification comporte l'identification.

16. Un dispositif d'utilisateur (300) selon n'importe laquelle des revendications 12 à 15 dans lequel le message de demande de contrôle de transmission sortant (36) comporte une identification du dispositif d'utilisateur (300).

17. Un dispositif d'utilisateur (300) selon n'importe laquelle des revendications 12 à 16 dans lequel le message de demande de contrôle de transmission entrant (36) comporte un drapeau qualificatif, et dans lequel le dispositif d'utilisateur (300) est adapté pour exécuter une fonctionnalité étendue en réponse à une valeur du drapeau qualificatif du message de demande de contrôle de transmission (36), comportant au moins une fonctionnalité sélectionnée dans le groupe composé de :
l'enregistrement d'une demande de canal de transmission de continuation ;
l'annulation d'une demande de canal de transmission reçue précédemment ; et
l'exécution d'une libération automatique du canal de transmission.

18. Un dispositif d'utilisateur (300) selon n'importe laquelle des revendications 12 à 17 dans lequel le message de demande de canal de transmission sortant (36) comporte un drapeau qualificatif, et dans lequel la valeur du drapeau qualificatif du message de demande de canal de transmission (36) est indicatrice d'une demande d'exécution d'une fonctionnalité étendue comportant au moins une fonctionnalité sélectionnée dans le groupe composé de :
l'enregistrement d'une demande de canal de transmission de continuation au niveau du dispositif dans le mode de transmission en semi-duplex ;
l'annulation d'une demande de canal de transmission reçue précédemment au niveau du dispositif dans le mode de transmission en semi-duplex ; et
l'exécution d'une libération automatique du canal de transmission par le dispositif dans le mode de transmission en semi-duplex.

19. Un réseau (39, 200) adapté pour faciliter une session semi-duplex active impliquant une pluralité de dispositifs d'utilisateur (20, 30, 34) à l'aide d'une fonctionnalité de communication vocale semi-duplex délivrée par réseau, le réseau (39, 200) étant **caractérisé par** :
un élément de traitement de message (204) adapté pour transférer un message de demande de canal de transmission (36) d'un dispositif de réception en semi-duplex de la pluralité de dispositifs d'utilisateur (20, 30, 34) à un dispositif de transmission en semi-duplex (20) de la pluralité de dispositifs d'utilisateur (20, 30, 34) :
en recevant (120) le message de demande de canal de transmission (36) sur un canal d'entrée (202) du dispositif de réception en semi-duplex ;
en déterminant quel dispositif parmi la pluralité de dispositifs d'utilisateur (20, 30, 34) est le dispositif de transmission en semi-duplex (20) sur la base du message de demande de canal de transmission (36) ; et
en transmettant (130) le message de demande de canal de transmission (36) sur un canal de sortie (206) au dispositif de transmission en semi-duplex (20) ;
dans lequel ledit réseau (39, 200) est adapté pour transférer seulement un premier message de demande de canal de transmission (36) du dispositif de réception en semi-duplex (34) au dispositif de transmission en semi-duplex (20) pendant une durée de protection contre les inondations fixée.

20. Un système **caractérisé par** une pluralité de dispositifs d'utilisateur (20, 30, 34) selon n'importe laquelle des revendications 12 à 18 en combinaison avec un réseau (39, 200) selon la revendication 19.
